# EUROPÄISCHE PATENTSCHRIFT

(11) **EP 0 682 333 B1**
(45) Veröffentlichungstag und Bekanntmachung des Hinweises auf die Patenterteilung: **04.08.1999**
(21) Anmeldenummer: 95102132.8
(22) Anmeldetag: 16.02.1995
(51) Int. Cl.: G09F 3/00

(54) **Sicherheitsetikettenstreifen**
Label stock
Bande d'étiquettes

(30) Priorität: 10.05.1994 DE 4416444; 11.10.1994 DE 4436284
(43) Veröffentlichungstag der Anmeldung: 15.11.1995
(60) Teilanmeldung: 98119673.6
(73) Patentinhaber: Meto International GmbH, 69434 Hirschhorn/Neckar (DE)
(72) Erfinder: Chamberlain, John, Boca Raton, FL 33433 (US); Klassen, Gordon, D-69221 Dossenheim (DE)
(74) Vertreter: Franzen, Peter

(56) Entgegenhaltungen:
- EP-A- 0 446 910
- EP-A- 0 578 992
- DE-A- 4 024 723

## Beschreibung

Die Erfindung bezieht sich auf einen Sicherheitsetikettenstreifen, bestehend aus einem Trägerband mit ablösbar darauf aufgeklebten, adhäsiven Etiketten oder aus miteinander verbundenen Anhängern aus papierähnlichem Material sowie ein Verfahren zur Herstellung, wie zum Beispiel in Dokument DE 4 024 723 beschrieben.

Im Stande der Technik werden hochwertigere Artikel in Verkaufseinrichtungen in der Weise gegen Diebstähle geschützt, daß im Bereich des Ausganges des Verkaufsraumes ein Detektor aufgestellt wird, der mit einem in Etiketten oder Anhängern untergebrachten, an den Verkaufsgegenständen befestigten Sicherungselement in Wechselwirkung tritt. Letzteres interagiert beim Unterschreiten eines Schwellenabstandes elektromagnetisch, d.h. durch hochfrequente Wellen oder magnetisch mit dem Detektor. Falls somit ein - nicht zuvor durch das Verkaufspersonal deaktiviertes - Sicherungselement in der Absicht, es zu stehlen, am Detektor vorbeigeführt wird, spricht der Detektor an und gibt ein akustisches und/oder optisches und/oder elektronisches Warnsignal ab.

Die Etiketten werden herkömmlicherweise auf Trägerbändern geliefert, auf denen sie mittels einer Klebeverbindung befestigt sind. Das Verkaufspersonal entfernt sie bei der Kennzeichnung der Artikel manuell oder mittels eines geeigneten Handetikettiergerätes vom Trägerband und fixiert sie mittels der auf ihrer Rückseite verbleibenden, adhäsiven Beschichtung an dem jeweiligen Gegenstand. Alternativ können die Gegenstände bereits beim Hersteller oder in Verteilerzentren mit Sicherheitsetiketten versehen werden. Um alle gekennzeichneten Artikel gegen Diebstahl zu sichern, sind sämtliche auf einem Trägerbandstreifen oder einer -rolle gelieferten Etiketten mit - stets an derselben Stelle angebrachten - Sicherungselementen ausgestattet.

Als nachteilig ist der nicht unerhebliche Preis der Sicherheitsetiketten anzusehen, der primär durch die darin integrierten elektromagnetischen Sicherungselemente bedingt ist. Durch eingehende Untersuchungen wurde belegt, daß die höchste finanzielle Effizienz erreicht wird, falls nur ein gewisser Anteil der von Diebstahl bedrohten Artikel gesichert wird. Derartige Kostenreduzierungen werden jedoch zunichte gemacht, da in einem derartigen Fall zwei unterschiedliche, d.h. gesicherte und ungesicherte Etiketten zur Verwendung kommen müssen, so daß mit letzteren gekennzeichnete Artikel unschwer erkannt und bevorzugt entwendet werden. Außerdem erweist sich das Auszeichnen mit zwei unterschiedlichen Etiketten- bzw. Anhängerarten als zeitaufwendig.

Ein weiterer Nachteil der konventionellen Sicherheitsetiketten besteht in der stets gleichen Lage der elektromagnetisch aktiven Elemente auf dem Etikett. Einem potentiellen Ladendieb ist es dadurch unschwer möglich, das gesicherte Etikett als solches zu erkennen, es zu entfernen und mit dem nunmehr ungesicherten Artikel ungestört die Ausgangskontrollen zu passieren.

Die Aufgabe der vorliegenden Erfindung besteht darin, Sicherungsetiketten zu schaffen, die sich einerseits durch geringe Herstellungskosten auszeichnen, andererseits nur schwer identifizierbar sind.

Im folgenden werden zwei unabhängig voneinander realisierbare Alternativen vorgeschlagen, die jedoch auch kombiniert werden können. Während die erste Alternative lehrt, nicht alle Etiketten zu sichern, bezieht sich die zweite auf die Positionierung der Sicherungselemente.

Erfindungsgemäß wird die Aufgabe dadurch gelöst, daß nur eine bestimmte Anzahl der Etiketten oder Anhänger mit elektromagnetisch aktiven bzw. aktivierbaren Sicherungselementen versehen ist.

Der Kerngedanke besteht darin, nicht die Gesamtheit (d.h. jedes) der auf einem Streifen gelieferten Etiketten bzw. Anhänger, sondern nur einen festgelegten Anteil ihrer Anzahl (z.B. etwa 80 %) mit Sicherungselementen auszustatten, während die übrigen Etiketten nicht elektromagnetisch aktiv oder aktivierbar sind. Da sämtliche Etiketten bzw. Anhänger aus demselben Material bestehen, gleichartig bedruckt sind und von demselben Streifen stammen, ist nur schwer erkennbar, welches von ihnen elektromagnetisch gesichert und welches ungesichert ist. Als zweckmäßig erweist sich dabei, das Etikett so zu gestalten, daß das Sicherungselement getarnt, d.h. optisch nicht vom übrigen Etikett unterscheidbar ist. Unter den erfindungsgemäßen Gedanken fallen außer Trägerbandstreifen mit Etiketten auch Trägerbandrollen, die in einem Spende- oder Etikettiergerät zur Verwendung kommen können, sowie alle Arten von Sicherungsanhängern aus papierähnlichem Material, die in Rollen- oder Streifenform bzw. als Karte (d.h. zweidimensional über- und nebeneinander positioniert) geliefert und beim Auszeichnen mittels - benachbarte Anhänger trennender - Perforationen voneinander separiert werden.

Die Vorteile der Erfindung bestehen außer den entscheidend verminderten Herstellungskosten darin, daß es nur schwer möglich ist, ein Sicherheitsetikett bzw. einen -anhänger von einer nicht wirksamen Nachahmung zu unterscheiden, so daß die Diebstahlwahrscheinlichkeit gering bleibt. Der finanzielle Aufwand für die Artikelsicherung ist im Ergebnis reduziert.

Da nicht nur unehrliche Kunden, sondern häufig auch zu einem nicht unerheblichen Teil das Personal zu Inventurdifferenzen beiträgt, sehen sich die mit der Sicherung der Artikel beauftragten Angestellten häufig gezwungen, die Kennzeichnung erst nach Ladenschluß vorzunehmen, so daß die Belegschaft nicht wahrnehmen kann, welcher Artikel mit einem aktiven und welcher mit einem inaktiven Etikett bzw. Anhänger versehen wird. Während eine Realisation der Erfindung mit einer sich regelmäßig wiederholenden Reihenfolge gesicherter und ungesicherter Etiketten von einem potentiellen Ladendieb nicht oder nur schwer erkannt würde, könnte die Reihenfolge jedoch von den täglich in Kontakt mit den Artikeln und den Etiketten kommenden Angestellten identifiziert werden, weshalb es ihnen weiterhin möglich ist, ungesicherte Artikel zu erkennen und widerrechtlich aus dem Verkaufsraum zu entfernen. In einer vorteilhaften Ausführungsform der Erfindung sind daher die mit einem Sicherungselement ausgestatteten Etiketten bzw. Anhänger unregelmäßig, d.h. nach dem Zufallsprinzip auf dem Streifen verteilt, so daß ihre Reihenfolge weder vom Kunden noch von der Belegschaft erkennbar ist. Unter einer unregelmäßigen Verteilung wird hier eine - unkorrelierte - Reihenfolge verstanden, die sich auf einem Streifen nur mit geringer Wahrscheinlichkeit wiederholen kann, so daß im Ergebnis die aktiven und inaktiven Etiketten auf jedem Streifen in wechselnder Reihenfolge positioniert sind. Dabei bleibt das Verhältnis zwischen gesicherten und ungesicherten Anhängern bzw. Etiketten jedoch näherungsweise konstant. Eine derartige Reihenfolge ist beispielsweise in einer rechnergesteuerten Fertigungsanlage mittels eines Zufallszahlengenerators herstellbar.

Weiterhin ist vorgeschlagen, die elektromagnetisch inaktiven Etiketten bzw. Anhänger mit Attrappen zu bestücken, deren Form und Farbgebung mit einem Sicherungselement übereinstimmt, um sie optisch von aktiven Etiketten ununterscheidbar zu gestalten und somit zu verhindern, daß sie vor einem Diebstahlsversuch von dem geschützten Artikel abgelöst werden. Die Attrappen können beispielsweise - auf die dem Trägerband zugewandte Fläche von papierenen Etiketten aufgebrachte oder in das Innere von Anhängern eingedruckte - Druckfarben (Tinte) sein. Wahlweise sind auf der Rückseite der Etiketten aufgeklebte oder in Anhänger eingebrachte Metallfolien bzw. -bleche verwendbar.

Alternativ zur Lehre des Anspruchs 1 läßt sich das der Erfindung zugrundeliegende Problem dadurch lösen, daß die Position der Sicherungselemente auf den Etiketten oder Anhängern in seitlicher und/oder axialer Richtung variiert.

Der Kerngedanke dieser Alternative besteht darin, die Erkennung der Sicherungselemente dadurch zu erschweren, daß sie in unterschiedlichen Positionen angebracht werden. Da sie bei konventionellen Etiketten stets in derselben Lage positioniert sind, wird ein potentieller Ladendieb, sollte er an der ihm bekannten Stelle kein Sicherungselement vorfinden, davon ausgehen, daß das Etikett nicht geschützt ist und darauf verzichten, es von dem Artikel abzulösen. Er wird somit beim Versuch, den Gegenstand widerrechtlich aus dem Verkaufsraum zu entfernen, an der Ausgangskontrolle detektiert. Die Position der Sicherungselemente variiert in dieser Alternative der Erfindung in der Richtung der Achse des Streifens der Etiketten (d.h. des Trägerbandes) bzw. der Anhänger und/oder in der dazu orthogonalen (seitlichen) Richtung.

Die Vorteile dieser Alternative bestehen primär in der erschwerten Identifizierung der Sicherungselemente und in der somit verbesserten Diebstahlsicherheit.

Um zu verhindern, daß dem Personal oder Kunden die Lage der Sicherungselemente dadurch offensichtlich wird, daß sie sich in einer gleichmäßigen Reihenfolge wiederholt, bietet sich an, die Sicherungselemente unregelmäßig, also nach dem Zufallsprinzip zu positionieren. Die Positionierung der Sicherungselemente kann somit durch einen Zufallszahlengenerator erfolgen. Durch die nicht vorhersehbare, stets unterschiedliche (unkorrelierte) Lage der Sicherungselemente auf den Etiketten bzw. Anhängern ist ihre Identifikation weiter erschwert und die Diebstahlsicherheit somit verbessert.

Weiterhin ist empfohlen, auch die dem Trägerband zugewandte Fläche des Sicherungselementes mit einer selbstklebenden Beschichtung zu versehen, um das Ablösen des Sicherungselementes und/oder des Etiketts vom gekennzeichneten Artikel problematischer zu gestalten.

Alternativ kann das Sicherungselement - geschützt und nur schwer als solches identifizierbar - innerhalb des eigentlichen Etiketts oder Anhängers angebracht werden.

Bezüglich der Art des Sicherungselementes bestehen verschiedene Möglichkeiten:

Zunächst kann ein schmaler Streifen aus weichmagnetischem Material zum Einsatz kommen. Er wird in der Ausgangskontrolle mit einem magnetischen Wechselfeld beaufschlagt und entsprechend der jeweiligen Frequenz ummagnetisiert. Da der Streifen nunmehr selbst ein Wechselfeld abstrahlt, das von einer Empfängerantenne detektiert wird, erfolgt eine Aktivierung des Diebstahlalarmes. Zur Deaktivierung kann der Streifen zusätzlich mit im Abstand voneinander angeordneten, hartmagnetischen Metallstücken überdeckt werden.

Weiterhin ist eine weichmagnetische, auf einer Trägerfolie aufgebrachte, d.h. aufgedampfte oder aufgesputterte Dünnfilmschicht als Sicherungselement vorgeschlagen. Zum Deaktivieren kann darunter und/oder darüber eine hartmagnetische Metallfolie, beispielsweise aus Nickel vorgesehen werden.

Schließlich sind alternativ zu den magnetischen Sicherungseinrichtungen elektromagnetisch arbeitende Resonanzschwingkreise empfohlen, die als Dünnschichtschaltungen realisiert werden können. Am Ausgang werden die aus einem Kondensator und einer Induktivität bestehenden Schwingkreise mit einem elektromagnetischen Hochfrequenzfeld beaufschlagt, so daß sie im Resonanzfall ebenfalls Wellen abstrahlen, die zur Alarmierung mittels geeigneter Antennen erfaßt werden.

Ein besonders geeignetes Verfahren zur Herstellung des Sicherheitsetikettenstreifens zeichnet sich dadurch aus, daß die Sicherungselemente auf ein Sicherungselementeträgerband aufgeklebt werden, und daß die Sicherungselemente an einer Spendkante vom Sicherungselementeträgerband getrennt und mit der Deckschicht zusammenlaminiert werden.

Die Grundidee besteht darin, die Sicherungselemente von einem Sicherungselementeträgerband abzulösen und derart zu spenden, daß sie an die gewünschte Position auf dem Sicherheitsetikett oder -anhänger gelangen. Die Sicherungselemente, die eine beliebige Form und Größe aufweisen können, werden somit zunächst durch eine Klebeverbindung auf einem Sicherungselementeträgerband befestigt und bei der Herstellung der Sicherheitsetiketten sukzessive an einer Spendkante wiederum davon abgelöst. Das dabei freiwerdende Sicherungselement wird nunmehr mit den übrigen Teilen des Etiketts oder Anhängers zusammengeführt und -laminiert. Entscheidend ist dabei, daß die Position des Sicherungselements auf dem (daran vorbeigeführten) Etikett bzw. Anhänger durch den Zeitpunkt des Spendvorganges festgelegt wird und somit beliebig steuerbar wird. Insbesondere besteht die Möglichkeit, große Etiketten oder Anhänger mit wesentlich kleineren Sicherungselementen zu versehen.

Die Vorteile bestehen vornehmlich darin, daß die Produktionskosten der Sicherheitsetiketten oder Sicherungsanhänger durch eine Verminderung der Flächen der Sicherungselemente reduzierbar sind, da beliebig kleine Sicherungselemente Verwendung finden können. Außerdem wird es möglich, ein standardisiertes Sicherungselement auf Etiketten und Anhänger beliebiger Art und Größe aufzubringen, was eine entscheidende Reduzierung der Lagerkosten zur Folge hat, da nur noch eine Art von Sicherungselementen vorrätig zu halten ist. Offensichtlich ist das vorgeschlagene Verfahren auch dazu geeignet, sämtliche Etiketten bzw. Anhängers eines Streifens mit Sicherungselementen auszustatten.

Zur sicheren Verbindung mit den Sicherheitsetiketten - bzw. mit den mit ihnen beklebten Gegenständen - oder den Anhängern ist vorgeschlagen, die Sicherungselemente derart auf das Sicherungselementeträgerband aufzukleben, daß ihre dem Trägerband zugewandte Seite auch nach dem Spendvorgang, d.h. nach dem Ablösen vom Sicherungselementeträgerband, adhäsiv bleibt. Die zum Fixieren des Sicherungselementes auf dem Sicherungselementeträgerband dienende Klebstoffschicht kann somit auch nach dem Spendvorgang zu seiner Befestigung dienen.

Es bestehen bezüglich des Laminierens verschiedene Möglichkeiten. In einer vorteilhaften Ausführungsform werden die Sicherungselemente auf eine mit einer selbstklebenden Beschichtung versehende Fläche der Deckschicht aufgebracht; die Fixierung der Sicherungselemente erfolgt somit durch die auf der Deckschicht bereits vorhandene Klebstoffschicht. Um ein Sicherheitsetikett auf einer möglichst großen Fläche mit einem Gegenstand verkleben zu können, wird in diesem Fall die adhäsive Beschichtung der Sicherungselemente - die zu ihrer Anbringung auf dem Sicherungselementeträgerband dient - derart positioniert, daß sie der selbstklebenden Beschichtung der Deckschicht gegenüberliegt.

Im speziellen findet dabei eine Deckschicht Verwendung, deren selbstklebende Fläche auf einem beliebigen Trägerband befestigt ist, das im folgenden als Deckschicht-Trägerband bezeichnet wird. Letzteres wird von der Deckschicht abgezogen, so daß die selbstklebende Fläche freiliegt und die Sicherungselemente werden darauf gespendet. Anschließend wird die nunmehr mit Sicherungselementen ausgestattete Deckschicht auf ein Trägerband aufgebracht. Andererseits kann zur Herstellung von Anhängern auch eine zweite Deckschicht mit der mit Sicherungselementen versehenen Deckschicht zusammenlaminiert werden; die Deckschichten nehmen die Sicherungselemente nach Art eines Sandwichs zwischen sich auf.

Alternativ zur Spendung der Sicherungselemente auf die Deckschicht können sie auf ein Trägerband aufgeklebt werden, auf das anschließend die Deckschicht aufgebracht wird. Die Befestigung der Sicherungselemente an dem Trägerband erfolgt vorzugsweise mit derselben adhäsiven Beschichtung, mit der das Sicherungselement vor dem Spendvorgang am Sicherungselementeträgerband befestigt war. Im Regelfall ist auch die mit dem Trägerband in Kontakt tretende Fläche der Deckschicht mit einer selbstklebenden Beschichtung versehen.

Dabei bietet es sich an, eine Deckschicht zu verwenden, die mit einer selbstklebenden Fläche auf einem Deckschicht-Trägerband befestigt ist. Letzteres wird von der Deckschicht abgezogen, bevor diese auf das Trägerband mit den Sicherungselementen aufgeklebt wird.

Weiterhin ist es möglich, die Deckschicht in bereits ausgestanzter Form mit den Sicherungselementen zusammenzuführen. Auch die Alternative, die Deckschicht erst nach dem Zusammenlaminieren mit den Sicherungselementen in ihre endgültige Etiketten- oder Anhängerform auszustanzen, ist denkbar.

Als Material der Deckschicht kommen primär Papier, Pappe und Kunststoff in Frage. Besteht die Deckschicht aus bedruckbarem Etikettenpapier und das zweite Deckschicht-Trägerband aus mit Silikon beschichtetem Papier, sind Sicherheitsetiketten herstellbar, die in herkömmlichen Handetikettiergeräten verwendet werden können. Aus Pappe oder Kunststoff können insbesondere strapazierfähige Sicherheitsanhänger hergestellt werden, wie sie beispielsweise zum Etikettieren von Textilien Verwendung finden.

Im folgenden werden Ausführungsformen der Erfindung anhand der Zeichnungen näher erläutert. Sie zeigen in schematischer Darstellung in
- Figur 1 :: die Herstellung von Trägerbandstreifen mit regelmäßig angeordneten Sicherungselemen ten,
- Figur 2:: die Herstellung von Trägerbandstreifen mit zufällig angeordneten Sicherungselementen,
- Figur 3:: die Herstellung von Trägerbandstreifen mit Attrappen von Sicherungselementen
- Figur 4:: die Herstellung von Trägerbandstreifen mit unterschiedlich positionierten Sicherungselementen mit mehreren Spend köpfen,
- Figur 5:: die Herstellung von Trägerbandstreifen mit unterschiedlich positionierten Sicherungselementen mit einem Spendkopf,
- Figur 6:: die Herstellung von Trägerbandstreifen unter Verwendung gestanzter Etiketten,
- Figur 7:: die Herstellung von Trägerbandstreifen unter Verwendung nicht gestanzter Etiketten,
- Figur 8:: die Herstellung von Trägerbandstreifen, wobei die Sicherungselemente auf ein Trägerband gespendet werden.

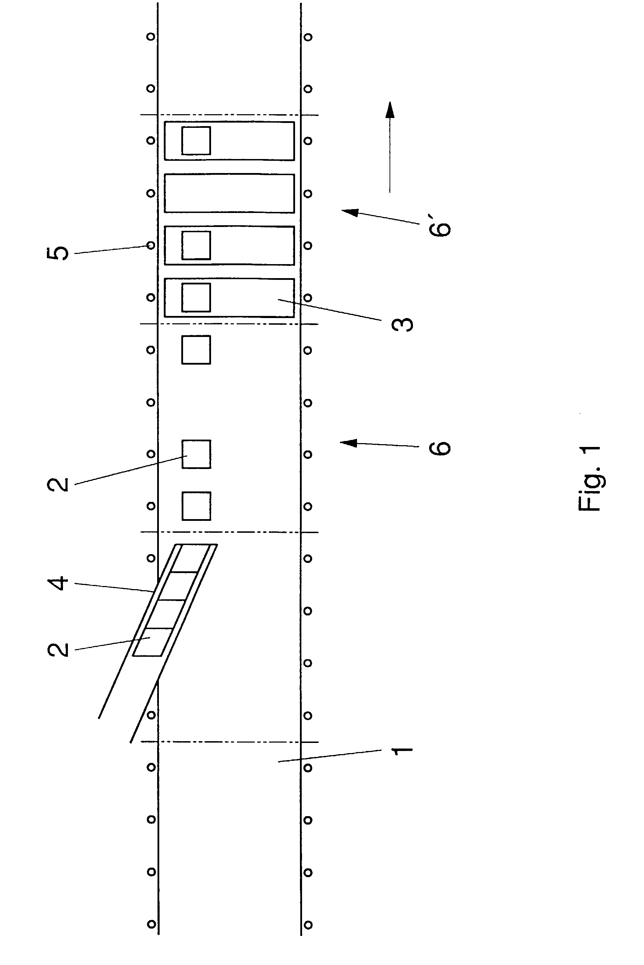

In Figur 1 wird ein auf drehbaren Rollen (5) gelagertes Trägerband (1) von links nach rechts transportiert. Ein Spendkopf (4) bringt elektromagnetische Sicherungselemente (2) beliebiger Art auf das Trägerband (1) auf, wobei anhand der - jeweils vier Etiketten (3) entsprechenden - Abschnitte (6, 6') erkennbar ist, daß sich die Reihenfolge der Sicherungselemente (2) nach dem Transportweg des Trägerbandes (1) für vier Etiketten (3) durch eine entsprechende Steuerung des Antriebs des Spendkopfes (4) wiederholt: jeweils das zweite Etikett (3) wird nicht mit einem Sicherungselement (2) versehen. Im rechts eingezeichneten Abschnitt (6') sind die auf dem Trägerband (1) positionierten Sicherungselemente (2) mittels aus eines nicht eingezeichneten, zweiten Spendkopfes bereits mit Etiketten (3) versehen.

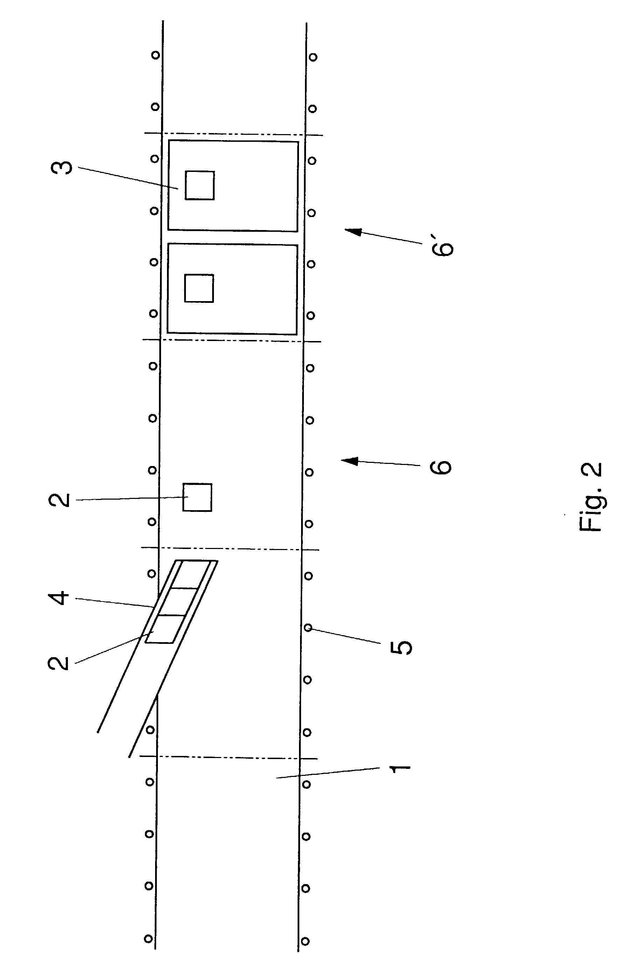

In Figur 2 ist im Unterschied zur Figur 1 keine festgelegte Reihenfolge der Sicherungselemente (2) erkennbar; während im ersten, links eingezeichneten Abschnitt (6) nur ein Etikett (3) gesichert ist, sind die beiden im rechten Abschnitt (6') dargestellten Etiketten (3) mit Sicherungselementen (2) ausgestattet.

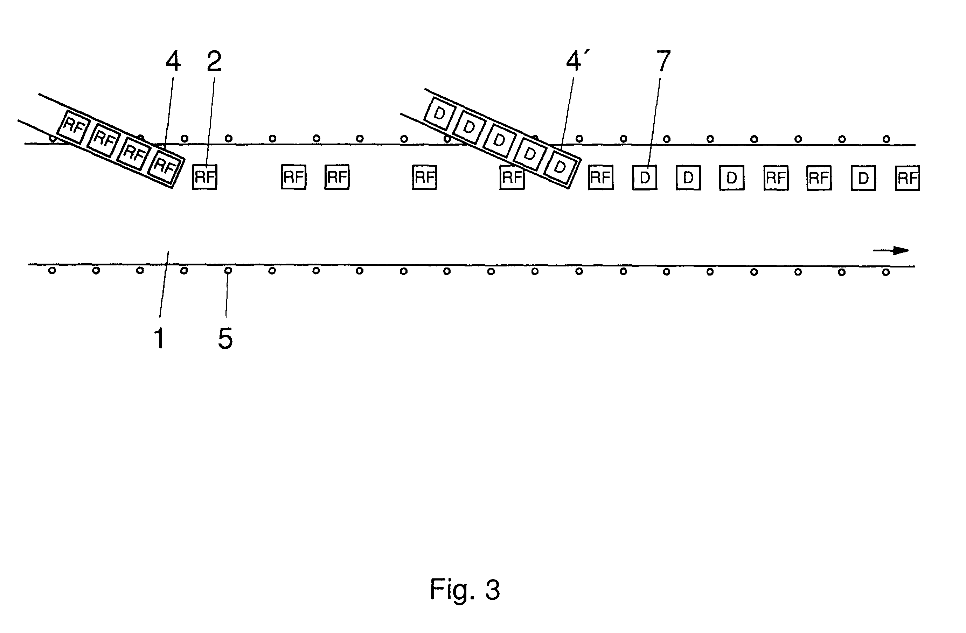

Figur 3 stellt die Herstellung eines Trägerbandstreifens dar, dessen Etiketten zum Teil mit Sicherungselementen (2) und zum Teil mit Attrappen (7) versehen sind. Während die Sicherungselemente mittels des links eingezeichneten Spendkopfes (4) auf das Trägerband (1) aufgetragen werden, dient ein zweiter Spendkopf (4') zum Aufbringen der in Form und Farbgebung mit den Sicherungselementen übereinstimmenden Attrappen (7).

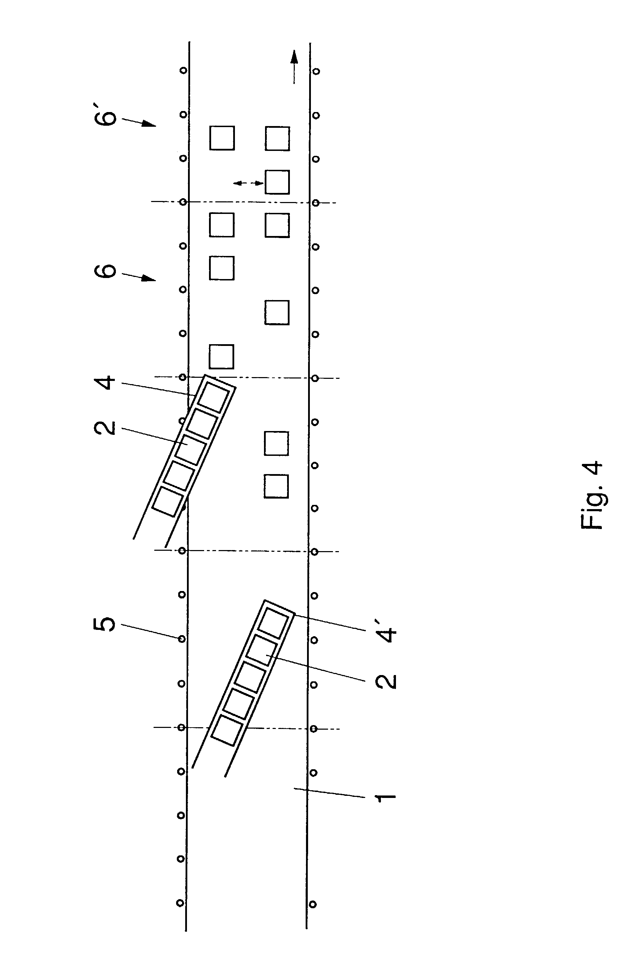

In Figur 4 wird das Trägerband (1) aus zwei unterschiedlichen, seitlich (d.h. in der Ebene der Etiketten (3), orthogonal zur Transportrichtung) und in der Vorschubrichtung des Trägerbandes (1) versetzten Spendköpfen (4, 4') mit Sicherungselementen (2) versehen. Anhand der Abschnitte (6, 6') ist erkennbar, daß einige Positionen freibleiben, so daß im Ergebnis nicht alle Etiketten (3) mit Sicherungselementen (2) versehen werden. Außerdem variiert die Reihenfolge der Sicherungselemente (2) nach dem Zufallsprinzip. Die dargestellte Vorrichtung kann einerseits dazu dienen, Sicherungselemente (2) für seitlich nebeneinander angeordnete Etiketten (3) auf das Trägerband (1) aufzubringen, andererseits sich über die gesamte Breite des Trägerband (1) erstreckende Etiketten (3) mit Sicherungselementen (2) variierender Position zu versehen. In beiden Fällen können einzelne Etiketten (3) frei von Sicherungselementen (2) bleiben. Es besteht auch die Möglichkeit, die Spendköpfe (4, 4') zur Variation der Lage der Sicherungselemente (2) in seitlicher Richtung zu verschwenken. Schließlich kann die Position der Sicherungselemente (2) in der Bewegungsrichtung des Trägerbandes (1) durch eine geeignete Steuerung des Zeitpunktes des Aufbringens variiert werden.

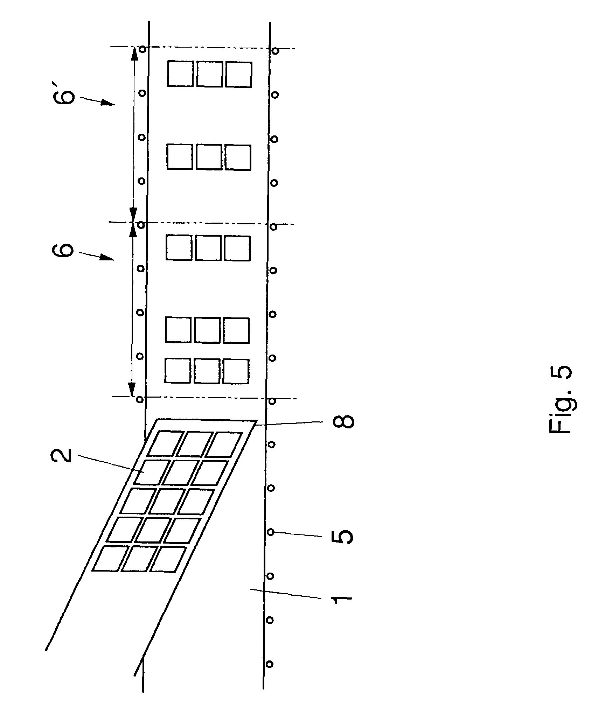

Im Unterschied zur Figur 4 wird das Trägerband (1) in Figur 5 mittels eines einzigen Spendkopfes (8) mit Sicherungselementen (2) ausgestattet. Der Spendkopf (8) weist jedoch drei seitlich nebeneinander angeordnete Spendkanäle auf und ist somit geeignet, drei nebeneinander angeordnete Etiketten (3) mit Sicherungselementen (2) zu versehen, wobei jeweils nur ein Teil der nebeneinander angeordneten Etiketten (3) Sicherungselemente erhalten kann, falls die Spendkanäle getrennt voneinander aktivierbar sind. Alternativ kann ein Etikett (3) an drei unterschiedlichen Positionen mit einem Sicherungselement (2) ausgestattet werden.

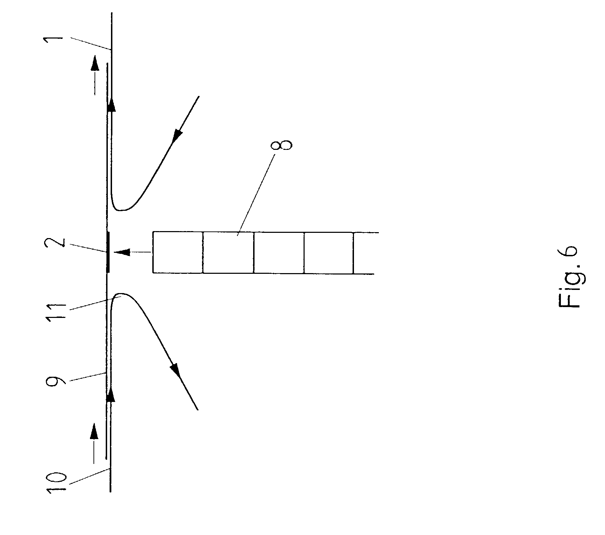

In Figur 6 findet ein Spendkopf (8) Verwendung, um auf einem Sicherungselementeträgerband aufgeklebte Sicherungselemente (2) von letzterem zu trennen und auf eine bereits in die endgültige Form eines Etiketts (3) ausgestanzte Deckschicht (9) zu spenden. Die Deckschicht (9) ist anfangs auf einem Deckschicht-Trägerband (10) aufgeklebt und wird an einer Spendkante (11) davon gelöst. In der Regel ist die Geschwindigkeit, mit der die Deckschicht (9) am Spendkopf (8) vorbeigeführt wird, konstant. Auf die freiliegende Deckschicht (9) werden nunmehr sukzessive die Sicherungselemente (2) mittels des Spendkopfes (8) aufgebracht. Das Sicherungselementeträgerband mit den Sicherungselementen (2) wird nicht kontinuierlich, sondern schrittweise bewegt. Bei jedem Schritt wird ein Sicherungselement (2) in an sich bekannter Weise an einer (nicht eingezeichneten) Spendkante von seinem Sicherungselementeträgerband getrennt und geht eine adhäsive Bindung mit der Deckschicht (9) ein. Das nunmehr fertige Sicherheitsetikett wird schließlich auf das Trägerband (1) aufgebracht. Es ist offensichtlich, daß die Position des Sicherungselementes (2) auf dem fertigen Sicherheitsetikett durch den Zeitpunkt festgelegt wird, an dem das Sicherungselement (2) von seinem Sicherungselementeträgerband getrennt wird und somit beliebig steuerbar ist.

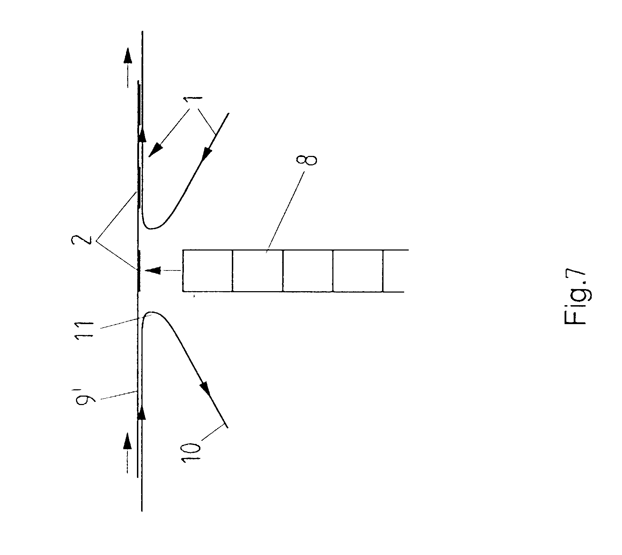

In Figur 7 wird eine Deckschicht (9') mit größerer Länge als in Figur 6 verarbeitet. Diese Deckschicht (9') ist beispielsweise ein Laminat, das anschließend noch in die endgültige Form zu stanzen ist; daher wird es mit mehreren Sicherungselementen (2) versehen.

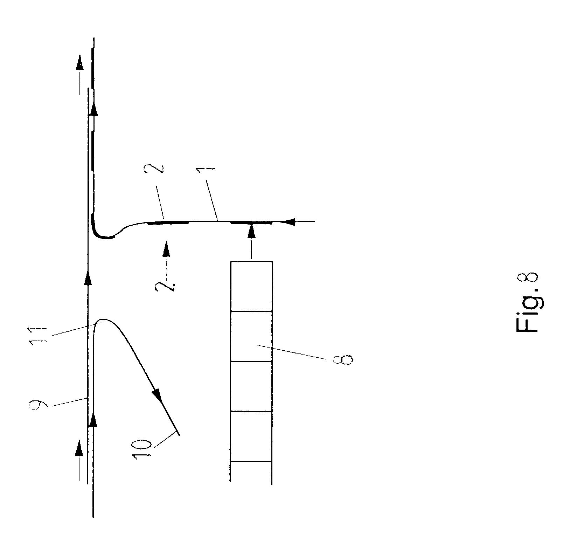

In Figur 8 wird die Deckschicht (9), die sowohl ein gestanztes als auch ein noch nicht gestanztes Laminat sein kann, mit etwa konstanter Geschwindigkeit bewegt und an der Spendkante (11) vom Deckschicht-Trägerband (10) getrennt und auf das Trägerband (12) aufgebracht. Die Sicherungselemente (2) werden im Unterschied zu den vorhergehenden Figuren 6 und 7 jedoch mittels des Spendkopfes (8) auf das Trägerband (1) aufgebracht, das sich mit derselben Geschwindigkeit wie die Deckschicht (9) bewegt. Erst im Anschluß daran wird die Deckschicht (9) darauf laminiert. Anzumerken bleibt, daß die Trägerbänder (1,10) - ohne die bzw. mit der Deckschicht (9) - von Rollen abgewickelt und auf andere Rollen aufgewickelt werden.

Es ist offensichtlich, daß die Erfindung ermöglicht, die Sicherungselemente an beliebiger Stelle der Etiketten oder Anhänger anzubringen. Ein weiterer Vorzug besteht darin, daß das erfindungsgemäße Verfahren bei beliebigen Arten von Etiketten und Anhängern zur Verwendung kommen kann. Im Ergebnis erhält man also einen Sicherheitsetikettenstreifen, der sich durch Preiswürdigkeit und hohe Diebstahlsicherheit auszeichnet.

## Patentansprüche

1. Sicherheitsetikettenstreifen, bestehend aus einem Trägerband (1) mit ablösbar darauf aufgeklebten, adhäsiven Etiketten (3) oder aus miteinander verbundenen Anhängern aus papierähnlichem Material und mit elektromagnetisch aktiven oder aktivierbaren Sicherungselementen (2), **dadurch gekennzeichnet**, daß nur ein festgelegter Anteil der Etiketten (3) oder der Anhänger mit den Sicherungselementen (2) ausgestattet ist.

2. Streifen nach Anspruch 1, **dadurch gekennzeichnet**, daß die Sicherungselemente (2) nach dem Zufallsprinzip auf die Etiketten (3) oder Anhänger verteilt sind.

3. Streifen nach Anspruch 1 oder 2, **dadurch gekennzeichnet,** daß die nicht mit Sicherungselementen (2) ausgestatteten Etiketten (3) oder Anhänger mit elektromagnetisch unwirksamen Attrappen (7) bestückt sind, deren Form und Farbgebung mit einem Sicherungselement (2) übereinstimmt.

4. Streifen nach Anspruch 3, **dadurch gekennzeichnet**, daß die Attrappen (7) Metallfolien oder Metallbleche sind, die auf der dem Trägerband (1) benachbarten Fläche der Etiketten (3) aufgeklebt oder innerhalb der Anhänger angebracht sind.

5. Streifen nach Anspruch 1, **dadurch gekennzeichnet**, daß die Sicherungselemente (2) bezüglich der Etiketten (3) oder der Anhängern in unterschiedlichen Positionen angebracht sind.

6. Streifen nach Anspruch 5, **dadurch gekennzeichnet,** daß die Positionen der Sicherungselemente (2) bezüglich der Etiketten (3) oder der Anhänger nach dem Zufallsprinzip variieren.

## Revendications

1. Ruban d'étiquettes de sécurité se composant d'un ruban porteur (1) avec des étiquettes adhésives (3) détachables collées dessus, ou composé d'étiquettes à attacher d'un matériau semblable à du papier reliées entre elles, et avec des éléments de sécurité (2) à action électromagnétique ou susceptibles d'être activés de façon électromagnétique, **caractérisé en ce que** seul un pourcentage déterminé des étiquettes (3) ou des étiquettes à attacher est équipé des éléments de sécurité (2).

2. Ruban selon la revendication 1, **caractérisé en ce que** les éléments de sécurité (2) sont répartis de façon aléatoire sur les étiquettes (3) ou les étiquettes à attacher.

3. Ruban selon l'une des revendications 1 ou 2, **caractérisé en ce que** les étiquettes (3) ou les étiquettes à attacher qui ne sont pas équipées d'éléments de sécurité (2) sont dotées d'éléments factices sans action électromagnétique (7) dont la forme et la couleur correspondent à un élément de sécurité (2).

4. Ruban selon la revendication 3, **caractérisé en ce que** les éléments factices (7) sont des feuilles ou des plaques de métal qui sont collées sur la surface des étiquettes (3) voisine du ruban porteur (1) ou disposées à l'intérieur des étiquettes à attacher.

5. Ruban selon la revendication 1, **caractérisé en ce que** les éléments de sécurité (2) sont agencés dans des positions différentes par rapport aux étiquettes (3) ou étiquettes à attacher.

6. Ruban selon la revendication 5, **caractérisé en ce que** les positions des éléments de sécurité (2) varient de façon aléatoire par rapport aux étiquettes (3) ou étiquettes à attacher.

## Claims

1. A web with security labels, comprising a substrate (1) with adhesive labels (3) detachably bonded thereto, or interconnected tags made of a paper-like material, and with electromagnetically active or activatable security elements (2), **characterized in that** only a predetermined percentage of the labels (3) or tags is provided with the security elements (2).

2. A web as claimed in claim 1, **characterized in that** the security elements (2) are randomly distributed among the labels (3) or tags.

3. A web as claimed in claim 1 or 2, **characterized in that** the labels (3) or tags not equipped with security elements (2) are provided with electromagnetically ineffective dummies (7) conformed in shape and color to a security element (2).

4. A web as claimed in claim 3, **characterized in that** the dummies (7) are foils or sheets of metal that are adhesively bonded to the side of the labels (3) close to the substrate (1) or are inserted within the tags.

5. A web as claimed in claim 1, **characterized in that** the security elements (2) are provided in different positions relative to the labels (3) or tags.

6. A web as claimed in claim 5, **characterized in that** the positions of the security elements (2) relative to the labels (3) or tags vary at random.
